(19) **Europäisches Patentamt**
**European Patent Office**
**Office européen des brevets**

(11) Veröffentlichungsnummer: **0 294 428 B1**

(12) # EUROPÄISCHE PATENTSCHRIFT

(45) Veröffentlichungstag der Patentschrift:
**16.10.91 Patentblatt 91/42**

(51) Int. Cl.⁵: **B65G 65/48**

(21) Anmeldenummer: **88900358.8**

(22) Anmeldetag: **11.12.87**

(86) Internationale Anmeldenummer:
**PCT/EP87/00773**

(87) Internationale Veröffentlichungsnummer:
**WO 88/04270 16.06.88 Gazette 88/13**

(54) **WALZENAUSTRAG.**

(30) Priorität: **11.12.86 CH 4930/86**

(43) Veröffentlichungstag der Anmeldung:
**14.12.88 Patentblatt 88/50**

(45) Bekanntmachung des Hinweises auf die
Patenterteilung:
**16.10.91 Patentblatt 91/42**

(84) Benannte Vertragsstaaten:
**AT BE CH DE FR GB IT LI LU NL SE**

(56) Entgegenhaltungen:
**EP-A- 0 108 863**

(56) Entgegenhaltungen:
**DE-A- 2 442 189**
**FR-A- 1 402 827**
**FR-A- 2 482 568**
**NL-A- 6 403 736**

(73) Patentinhaber: **BUEHLER AG**
**CH-9240 Uzwil (CH)**

(72) Erfinder: **GMÜR, Bruno**
**Boppartstr. 32**
**CH-9014 St. Gallen (CH)**

(74) Vertreter: **von Samson-Himmelstjerna,**
**Friedrich R. Dipl.-Phys. et al**
**Samson & Bülow Widenmayerstrasse 5/I**
**W-8000 München 22 (DE)**

**Beschreibung**

Die Erfindung betrifft einen Walzenaustrag für ein Lagersilo für mehlartige Schüttgüter, bestehend aus einem Austragstrichter, wenigstens zwei parallelen, in einer horizontalen Ebene nebeneinander drehbar im Austragstrichter gelagerten Walzen, einer wenigstens teilweisen Ummantelung der Walzen, sowie gleichmäßig auf diesen Walzen verteilten Längsstegen.

Beim Austrag aus größeren Lagersilozellen gibt es drei Problemkreise, die vor allem beachtet werden müssen: Das sichere Austragen des Produktes, das Dosieren, keine Störung auf das Fließverhalten im Siloinnern. Bei freifließenden und fieselfähigen Gütern genügen z. Bsp. Drosselquerschnitte mit oder ohne regelbare Schieber, entsprechend etwa der Auslasskonstruktion von Flüssigkeitstanks.

Mehlartige Güter sind ein Spezialfall, da bei richtiger Auslegung der Siloauslaufquerschnitte das Mehl gleich einer dickflüssigen Masse ohne Hilfe ab- und ausströmt. Tritt in dem freien Auslassbereich irgendeine Störung oder eine begünstigte Ausfließzone auf, so bewirkt dies aufgrund der Abstützkräfte der Schüttgutpartikel meistens eine entsprechend einseitige Entleerung des gesamten Silovolumens. Der Silo entleert sich über dem bevorzugten Abströmquerschnitt kaminartig. Dies ergibt für das übrige Lagergut größere Lagerzeiten und ist bei Nahrungsmitteln oft der Grund für eine qualitative Verminderung des Gutes und kann in Extremfällen auch zum Verderben des Nahrungsmittels führen.

Seit vielen Jahrzehnten wurden für das dosierte Austragen des Mehles aus großen Lagerkästen Austragwalzen verwendet. Die sehr weit verbreitete Anwendung des Austragwalzen während der vergangenen Jahrzehnte ist Beweis dafür, daß damit die drei eingangs formulierten Problemkreise zumindest im Prinzip gelöst werden konnten. Die Austragwalzen können in beachtlichen Längen hergestellt werden. Meistens war es nicht notwendig, den Siloauslaßbereich in Austragwalzenlängsrichtung zu verjüngen. Störungen bzw. der Gefahr des einseitigen Ausfließens begegnete man in der jüngeren Vergangenheit durch Einbau von Entlastungskörpern, Entlastungssattel usw. in dem Siloinneren.

In der GB-PS Nr. 788 797 ist ein Ausführungsbeispiel für eine solche Lösung gezeigt. Dabei sind zwei Austragwalzen bzw. ein Doppelwalzenpaar innerhalb eines an einem Silounterteil befestigbaren Austragtrichter eingebaut. Der Silokörper weist einen konisch verjüngten Auslaß auf, in dessen Oberteil ein Entlastungssattel angeordnet ist. Der in der Mitte über den Austragwalzen angeordnete Entlastungssattel erzwingt das Produkt auf zwei seitliche Abflußzonen. Interessant ist bei dieser Lösung, daß der konisch verjüngte Auslaß in den Austragtrichter bis wenig über die beiden Austragwalzen stufenweise fortgesetzt ist. Die konkrete Lösung, wie in der GB-PS Nr. 788 797 dargestellt ist, würde sich allerdings für den Austrag von Mehl aus Lagersilos nicht eignen, da Mehl oft das Strömungsverhalten von Wasser annehmen kann, dies weil das Mehl stark fluidisierbar ist. Eine bekannte Austragvorrichtung für Mehl aus einer Silozelle ist in der DE-OS Nr. 1 456 692 beschrieben, allerdings mit nur einer Austragwalze. Auch hier wurde dem Silounterteil eine besondere Form gegeben, gerundete, schräge Seitenwände sowie einen Strömungskörper über den Siloauslaßschrägen. Die Austragwalze verschließt völlig die untere Siloauslaßöffnung, so daß die jeweils ausgetragene Produktmenge bestimmt ist, durch den Inhalt der am Umfang der Austragwalzen gebildeten Kammern, sowie der Austragwalzendrehzahl. Durch regelmäßige Drehrichtungsumkehr kann ein einseitiges Austragen aus dem unteren Siloaustragbereich und somit ein einseitiges Absenken in dem Silo verhindert werden. Der grundsätzliche Nachteil der Lösung gemäß DE-OS Nr. 1 456 692 liegt in der besonderen, von der erfindungsgemäßen Lehre verlangten Gestaltung-des unteren Siloabschnittes. In einem Einzelfall kann dies eine gute Lösung sein, sie ist in der Mehrzahl der Fälle aber technisch nicht anwendbar. Die Silokörper werden häufig an Ort und Stelle durch vorhandene Fachleute erstellt. Gerade in Gebieten mit weniger guter Fachausbildung muß regelmäßig eine mangelhafte Ausführung der Arbeiten zur Kenntnis genommen werden. Das ist der Grund, weshalb beste Erfindungen, die je zur einen Hälfte unter voller Kontrolle des Erfinders in einer Herstellfirma und zur anderen Hälfte in fernen Ländern ohne seine Aufsicht realisiert werden, häufig scheitern.

Die erfindungsgemäße Lösung wird auf diese Weise ganz einfach nicht vollständig verwirklicht.

Aus der NL-A- 6 403 736 ist eine Dosiervorrichtung mit zwei drehbaren Walzen bekannt, die sich an das Ende eines Vorratrichters anschließen.

Ziel der Erfindung ist es Mängel der bekannten Lösungen zu verringern. Insbesondere soll eine neue Walzenaustragung für Mehl geschaffen werden, die eine gut dosierte Austragung des Mehles erlaubt.

Dieses Ziel wird bei einem gattungsgemäßen Walzenaustrag dadurch erreicht, daß jede Walze trichterartig ummantelt ist und dabei die Ummantelung zumindest angenähert Zylindersegmente aufweist, die konzentrisch zu der betreffenden Walze angeordnet sind, daß beidseits in jeder Endlage jeder Walze zumindest ein Längssteg bezüglich der Ummantelung in überdeckter Position ist, und daß die mittleren Teile der Ummantelung als ein sich mindestens über die untere Hälfte der Walzen erstreckender, gemeinsamer Sattel ausgebildet sind, an ihrem unteren Ende eine Staufläche aufweisen und die Walzen - von oben gesehen - von außen zur gemeinsamen Mitte drehbar angetrieben sind.

Praktische Versuche bestätigen sofort, daß die Zuordnung einer trichterartigen, nach oben offenen Ummantelung für jede der zwei Austragwalzen eine optimalere Beherrschung der Austragverhältnisse in vielerlei Hinsicht erlaubt, insbesondere eine Dosierung mit hoher Genauigkeit ermöglicht, negative Wirkungen auf die Absenkung des Gutes in dem Silo vermeidet, den Austrag betriebsicher macht und keine Entlastungseinbauten im Siloinnern erfordert.

Dadurch, daß die Austragwalzen in dem Austragtrichter angeordnet sind, kommt auch die Ummantelung im wesentlichen vollständig in den Bereich des Austragtrichters zu liegen. Durch den besonderen Bau und die Formgebung des Austragtrichters mit Austragwalze und Ummantelung entsteht eine Austrageinheit, die in der Herstellfirma fertig erstellt werden kann. Funktionsweise, Toleranzen und Art der Fertigung usw. können vom Erfinder unter kontrolle gehalten und damit unbekannte negative Faktoren ausgeschlossen werden. Der Siloauslaß muß lediglich die richtige Geometrie aufweisen und als Massenfluß-Silo konzipiert sein. Die neue Doppelwalzenaustrag-Vorrichtung braucht dann nur angeschraubt zu werden und die Anlage ist, auf den Teil bezogen, gemäß der Erfindung betriebsbereit.

Ein ganz besonderer Vorteil liegt darin, daß überall dort, wo eine alte Doppelwalzenaustragung durch eine neue ersetzt werden soll, dies nun mit Erfolg durch-die erfindungsgemäße Lösung geschehen kann.

Erfindungsgemäß kann verhindert werden, daß Mehl unkontrolliert durchschießt. Für eine erleichterte Fabrikation kann durch diese Maßnahmen zwischen den Austragwalzen und der Ummantelung genügend Laufspiel vorgesehen werden. Vorzugsweise wird gleichzeitig die innere Ummantelung auf der Produktaustragseite im unteren Teil mit einer Schräglage zwischen 30° und 60° ausgebildet. Durch all diese Maßnahmen läßt sich mit nur geringer motorischer Leistung das Mehl sehr genau dosiert austragen.

Die Austragwalzen weisen bevorzugt nur in Umfangsrichtung wirksame Mitnahmeelemente bzw. Längsstege auf, erzeugen also keine Förderkomponenten in Walzenlängsrichtung. Bevorzugt bilden die zwei Doppelwalzen mit ihren Ummantelungen eine erste Austrageinheit, die direkt an die freie untere Öffnung eines Lagersilos befestigbar ist. Eine zweite Sammelschnecken-Baueinheit mit einer Längsfördereinrichtung, vorzugsweise einer Förder- bzw. Sammelschnecke, wird unten an die erste Baueinheit befestigt, wobei die zweite Baueinheit zur Abgabe des Produktes an einen "Punkt" vorgesehen ist.

Bevorzugt wird den Austragwalzen ein drehzahleinstellbarer Antrieb zugeordnet, der vorzugsweise Mittel zur Fernsteuerung aufweist und ferner vorzugsweise auch die Sammelschnecke antreibt.

Besonders bevorzugt erfolgt die Füllung der Austragkammern und damit die Austragung vorwiegend im Schiftungsbereich.

Häufig ist es von Vorteil, die beiden Austragwalzen mit unterschiedlicher Drehzahl anzutreiben und hierdurch eine differenzierte Abzugsgeschwindigkeit des Lagergutes zu erzielen.

Ein weiterer Ausgestaltungsgedanke liegt darin, daß je zwei Walzen mit der Ummantelung derart zu einer Austrageinheit ausgebildet sind, daß in Walzenlängsrichtung zwei oder mehrere Austrageinheiten mit einem gemeinsamen Antrieb verbindbar sind, denen eine gemeinsame Förderschnecke zugeordnet ist. Auf diese Weise können größere Silozellen mit einer Anzahl von Abzugs-Grundeinheiten aufgebaut und aus dem jeweils optimalen Auslassquerschnitt das Produkt gezielt abgezogen und entsprechend dem Austrag dosiert werden.

Als ganz besonders vorteilhafte Lösung hat es sich erwiesen, wenn der Austragtrichter nach unten fortgesetzt ist, durch einen Trog mit Sammelschnecke im untersten Teil bzw. an dem unteren gerundeten Trichterende, so daß beide einen Abfördertrichter bilden, in dessen unteren Bereich unterhalb der Austragwalzen der Sattel angeordnet ist. Der aus Austragtrichter und Fördertrog gemeinsam gebildete Abfördertrichter präsentiert sich dabei in der Art eines an allen drei Ecken gerundeten Dreiecks mit seiner Spitze nach unten. Der Produktablenksattel sieht ebenfalls einem Dreieck ähnlich, jedoch mit seiner Spitze nach oben, und ist im mittleren Bereich des Abfördertrichters angeordnet.

Die erfindungsgemäße Vorrichtung kann so, analog zu der GB-PS Nr. 788 797, als Baueinheit konzipiert und direkt auch an einen vorhandenen Silounterteil befestigt werden. Wie in der Folge gezeigt wird, benötigt man für die neue Lösung keine über die Austragwalzen in der festen Silokonstruktion angeordnete Entlastungskörper. Die einzige Bedingung ist ein freier Massenfluß in dem Silo. Die neue Lösung übernimmt die von oben sich gleichmäßig absenkende Produktmasse und trägt die entsprechende Produktmenge aus.

Die Fig. 1 zeigt ein Beispiel eines Querschnittes eines erfindungsgemäßen Doppelwalzenaustrages.

Die Fig. 1a zeigt einen vergrößerten Ausschnitt der Fig. 1.

Die Fig. 2 ist ein Schnitt II-II der Fig. 1

Die Fig. 3a,3b, 3c zeigen je ein Beispiel der Anwendung des neuen Doppelwalzenaustrages für verschiedene Silogrößen.

Die Erfindung wird nun anhand einiger Ausführungsbeispiele mit weiteren Einzelheiten unter Bezugnahme auf die Zeichnung noch näher erläutert.

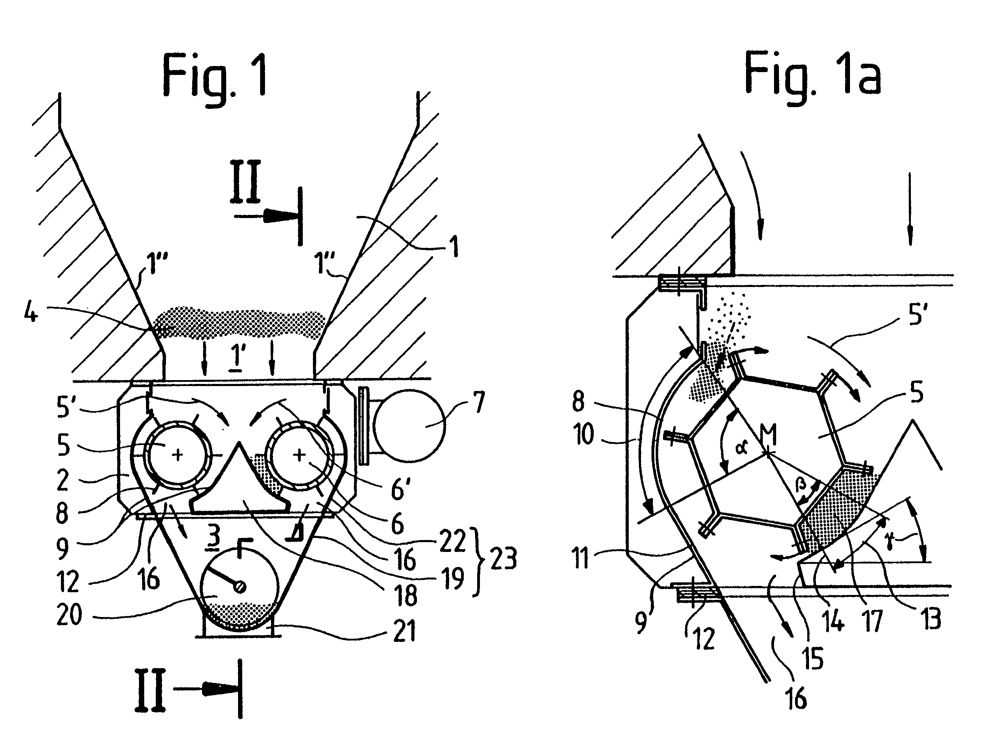

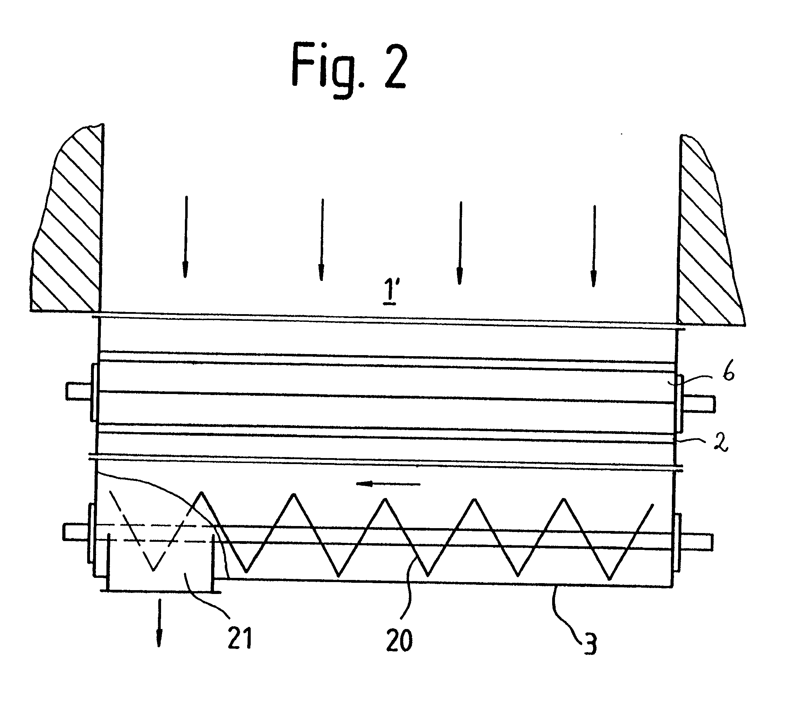

In der Folge wird nun Bezug genommen auf die Figuren 1 und 2.

Im oberen Teil ist der trichterförmige Teil eines Lagersilos 1 dargestellt, an den direkt eine Doppelwalzenaustragvorrichtung bzw. Austrageinheit 2 angeflanscht ist, an die wiederum eine Sammelschnecken-Baueinheit 3 angeschraubt ist. Der neue Doppelwalzenaustrag ist ein Austragdosierer und als solcher nicht eine Austraghilfe. Es wird deshalb im Normalfall vorausgesetzt, daß das Lagergut in dem Siloauslassbereich als Massenfluß sich nach unten absenkt. Eine Partie von, ggf. zu Demonstrationszwecken gefärbtem, Lagergut würde sich, wie mit Bezugszeichen 4 angedeutet ist, auf der ganzen horizontalen Fläche gleichmäßig nach unten bewegen. Zwei vorzugsweise auf gleicher Höhe angeordnete Austragwalzen 5 und 6 sind, wie mit Pfeil 5' bzw. 6' angedeutet, in gegenläufigem Sinne von außen nach der Mitte zu austragend von einem Getriebe- oder Antriebsmotor 7 angetrieben. Beide Austragwalzen 5 bzw. 6 weisen am äußeren Umfang eine Anzahl - auf dem Beispiel Fig. 1 sechs - Längsstege auf. Jeder Austragwalze 5 resp. 6 ist eine trichterartige und nach oben offene Ummantelung 9 zugeordnet. In Fig. 1a ist die eine Austragwalze 5 mit der Ummantelung 9 nochmals in größerem Maßstab dargestellt. Der äußere Teil der Ummantelung 9 weist in dem Bereich eines Winkels α einen etwa kreisförmigen und konzentrisch zu der Drehmitte M der Austragwalzen 5 angeordneten Abschnitt 10 auf, das unten über eine Ablaufschräge 11 mit einem Flansch 12 verbunden ist. Der innere Teil der Ummantelung 9 weist ebenfalls im Bereich eines Winkels β einen kreisförmig und konzentrisch zu der Drehmitte M der Austragwalze 5 angeordneten Abschnitt 13 auf, der unten in eine verhältnismäßig flach geneigte Staufläche 14 übergeht. Die Staufläche 14 ist mit einem Abschlußblech 15 verbunden, derart, daß zwischen der Ablaufschräge 11 sowie dem Abschlußblech 15 ein Abfließkanal 16 entsteht, durch den das Lagergut über die ganze Länge der Austragwalze 5 resp. 6 ausgetragen wird. Ersichtlich wird bei entsprechender Drehbewegung der Austragwalze 5 resp. 6 jeweils ein schraffiert markiertes Flächenstück 17 ausgetragen resp. dasjenige Volumen, das sich aus dem Flächenstück 17 und der ganzen Länge der Austragwalze 5 resp. 6 ergibt. Die Staufläche 14 hat eine zweifache Funktion. Sie weist einen Winkel γ von 30° bis 60° zur Horizontalen auf, bevorzugt etwa 40° bis 50°, so daß gegen die Abfließbewegung des Lagergutes an der betreffenden Stelle eine ganz leichte Stauwirkung entsteht. Dadurch wird das Mehlvolumen entsprechend einer Austragkammer 17 mit der Umfangsgeschwindigkeit der Austragwalzen 5 resp. 6 ausgeschoben. Das Produkt kann nicht einfach "durchschiessen". Bei Fehlen der Staufläche 14 besteht die Gefahr, daß sich das jeweilige Volumen 17 mit einer Geschwindigkeit entleert, die größer als die Umfangsgeschwindigkeit der Austragwalze 5 resp. 6 ist. Der Nachteil dabei wäre eine stossweise Produktabgabe. Da die Bewegung des Volumens 17 gehemmt ist, besteht zudem die Möglichkeit, zwischen den Längsstegen 8 sowie der Ummantelung 9 ein größeres Spiel vorzusehen, was größere Fabrikationstoleranzen zuläßt.

Wie der Fig. 1 entnehmbar ist, sind die inneren Teile der Ummantelung 9 zu einem Sattel 18 zusammengefügt was strömungstechnisch-wie auch im Hinblick auf die Festigkeit der gesamten Austrageinheit Vorteile bringt.

Eine Sammelschnecke 20 ist in einem die beiden Abfließkanäle 16 übergreifenden Trog 19 angeordnet, wobei die Sammelschnecke 20 das Produkt in dem Trog 19 auf einen Auslass 21 zufördert. Aus der Fig. 2 ist ferner ersichtlich, daß das System mit den zwei Austrageinheiten 2 und einer Schneckenaustrags-Baueinheit 3 zusätzlich den Vorteil hat, daß das über die ganze Länge des Siloauslasses 1' entnommene Gut auch gleichmäßig vermischt wird. An der Fig. 1 ist ferner erkennbar, daß die äußeren Abschnitte 10 und die Ablaufschrägen 11 der Ummantelung 9 zusammen einen Austragtrichter 22, der zusammen mit dem Trog 19 einen geschlossenen Abfördertrichter 23 bildet.

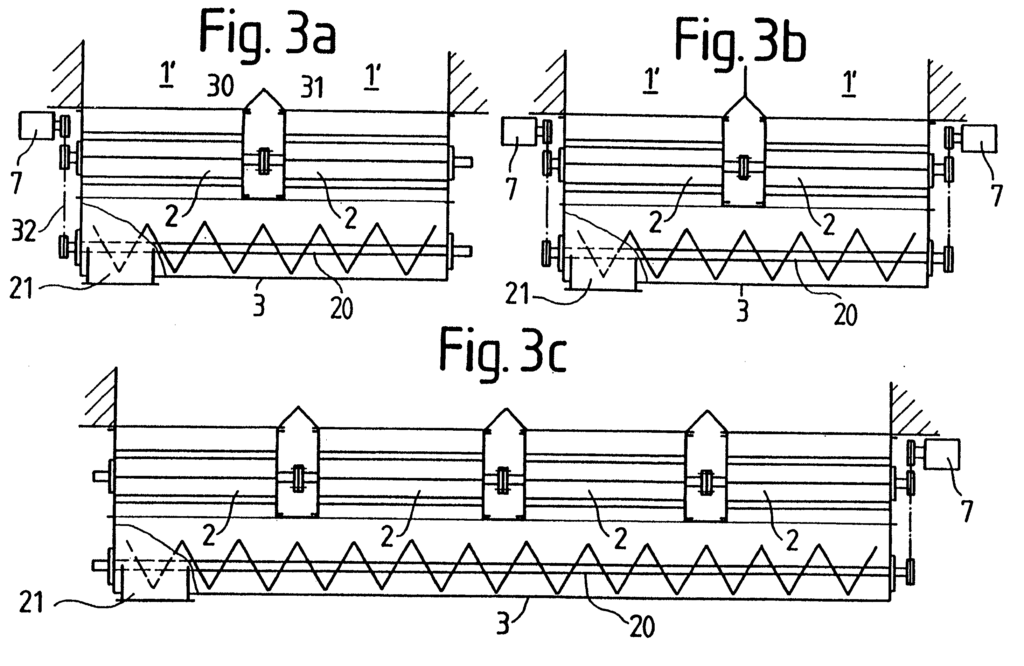

Die Fig. 3a zeigt die Verwendung der neuen Erfindung bei einem verhältnismäßig langen Siloauslass 1', so daß dieser mit zwei, über eine Kupplung 30 verbundene Austrageinheiten 2 versehen wird. Über der Verbindung der Kupplung 30 ist zum staubdichten Abtrennen und zum Schutze der Kupplung 30 ein Dach 31 angeordnet. Beide Austrageinheiten 2 geben das Produkt in einen gemeinsamen Trog 19 mit einer Sammelschnecke 20 ab, welche es an eine Stelle, bzw. an einen "Punkt" durch einen Auslass 21 abgibt. Alle drei Baueinheiten können durch einen einzigen, gemeinsamen Antrieb 7 sowie einen Übertrieb 32 angetrieben werden.

Die Fig. 3b zeigt im Unterschied zu der Fig. 3a die Austragung von Mehl, jedoch aus zwei getrennten Silozellen. Jede Austrageinheit 2 hat einen eigenen Antrieb 7, jedoch ist den zwei Austrageinheiten 2 auch hier nur eine Sammelschnecke 20 bzw. eine Schneckenaustrags-Baueinheit 3 zugeordnet. Eine solche Disposition ist bei Lagerzellen für Mehl häufig anzutreffen. Das Verhältnis der Austragleistung aus jeder Lagerzelle kann je nach Bedarf eingestellt werden. Dementsprechend können zwei Mehle, zum Beispiel zwei Teile eines Mehles von sehr guter Qualität und ein Teil eines Mehles mittlerer Qualität, ausgetragen und in der Sammelschnecke 20 zusammengemischt werden.

Die Fig. 3c zeigt, als eine dritte Möglichkeit, einen sehr langen Siloauslass, unter welchem vier, einen gemeinsamen Antrieb 7 aufweisenden Austrageinheiten 2 angeordnet sind, jedoch auch hier mit nur einer gemeinsamen Sammelschnecke 20.

Damit ist nun aber erkennbar, daß über das bisher bekannte hinaus nicht nur in hoher Dosiergenauigkeit das Lagerprodukt ausgetragen, sondern sogar direkt in das Ausfließverhalten in einem Lagersilo Einfluss genommen werden kann.

In der Fig. 1a ist links im Bild die Austragwalze 5 gerade in einer solchen Stellung gezeigt, daß ein Längssteg 8 eine leere Kammer der Austragwalze 5 freigibt, zur Füllung mit von oben nachfließendem Mehl. Durch die Drehbewegung im oberen Bereich von links nach rechts bzw. von der Außenseite zu der Mitte in Richtung auf den Sattel 18 ergibt sich auf diese Weise im Bereich der Schiftungen 1″ eine bevorzugte Fließzone, so daß ein positiver Effekt auf das gesamte Fließverhalten in dem Siloinnern entsteht. Bekanntlich ist es vor allem die Wandreibung, die sich nachteilig auf das Ausfließverhalten auswirkt. Durch den bevorzugten Austrag in Wandnähe, insbesondere an der schrägen Schiftung 1″ wird der häufig schlecht berechenbare Faktor der Wandreibung in seiner Wirksamkeit gemindert.

In vielen Fällen, gerade bei bestehenden Lagersilokörpern stellt man oft ein einseitiges Absinken des Produktes in dem Lagersilo fest. Durch gezielte Wahl der Drehzahl bzw. durch die Wahl von unterschiedlichen Drehzahlen der Austragwalzen 5 und 6 kann auch dieses Problem in der größeren Zahl der Fälle beseitigt werden, indem auf der Seite, an der das Produkt leichter zum Ausfließen neigt, die Drehzahl, z. Bsp. der Austragwalze 5, erniedrigt wird.

Entsprechend könnte in der Fig. 3c jedem Doppelwalzenaustrag ein eigener Antriebmotor mit stufenlos verstellbarer Drehzahl zugeordnet werden. Auf diese Weise läßt sich selbst bei sehr großen Lagerzellenkörpern die Produktabsenkung gezielt steuern.

## Patentansprüche

1. Walzenaustrag für ein Lagersilo (1) für mehlartige Schüttgüter, bestehend aus einem Austragstrichter (22), wenigstens zwei parallelen, in einer horizontalen Ebene nebeneinander drehbar im Austragstrichter (22) gelagerten Walzen (5, 6), einer wenigstens teilweisen Ummantelung (9) der Walzen (5, 6), sowie gleichmäßig auf diesen Walzen (5, 6) verteilten Längsstegen (8), **dadurch gekennzeichnet,**

a) daß jede Walze (5, 6) trichterartig ummantelt ist und dabei die Ummantelung (9) zumindest angenähert Zylindersegmente aufweist, die konzentrisch zu der betreffenden Walze (5, 6) angeordnet sind,

b) daß beidseits in jeder Endlage jeder Walze (5, 6) zumindest ein Längssteg (8) bezüglich der Ummantelung (9) in überdeckter Position ist, und

c) daß die mittleren Teile der Ummantelung (9) als ein sich mindestens über die untere Hälfte der Walzen (5,6) erstreckender, gemeinsamer Sattel (18) ausgebildet sind, an ihrem unteren Ende eine Staufläche (14) aufweisen und die Walzen (5, 6) - von oben gesehen - von außen zur gemeinsamen Mitte drehbar angetrieben sind.

2. Walzenaustrag nach Anspruch 1, dadurch gekennzeichnet, daß die Staufläche (14) eine Schräglage zwischen 30° und 60° zur Horizontalen hat.

3. Walzenaustrag nach Patentanspruch 1 oder 2, dadurch gekennzeichnet, daß die Längsstege (8) der Austragwalzen (5, 6) eine nur in Umfangsrichtung wirksame Förderkomponente aufweisen.

4. Walzenaustrag nach wenigstens einem der vorstehenden Patentansprüche, dadurch gekennzeichnet, daß zwei Doppelwalzen (5, 6) mit der Ummantelung (9) eine Austrageinheit (2) bilden, die direkt an die freie untere Öffnung (1′) eines Lagersilos (1) befestigbar ist, und daß eine Sammelschnecken-Baueinheit (3) mit einer Längsfördereinrichtung, vorzugsweise einer Förderschnecke (20), als eine zweite Baueinheit (3) unten an die Austrageinheit (2) befestigbar ist, wobei die Sammelschnecken-Baueinheit (3) zur Abgabe des Produktes an einen "Punkt" vorgesehen ist.

5. Walzenaustrag nach wenigstens einem der vorstehenden Patentansprüche 1 bis 8, dadurch gekennzeichnet, daß den Austragswalzen (5,6) ein drehzahleinstellbarer Antrieb (7) zugeordnet ist, der vorzugsweise Mittel zur Fernsteuerung aufweist.

6. Walzenaustrag nach wenigstens einem der vorstehenden Patentansprüche, gekennzeichnet durch eine Anordnung der Austragwalzen (5,6) derart, daß bei deren Drehung die Füllung der Austragskammern (17) und damit die Austragung vorwiegend im Bereich der Schiftung (1″) erfolgt.

7. Walzenaustrag nach wenigstens einem der vorstehenden Patentansprüche, dadurch gekennzeichnet, daß die beiden Austragwalzen (5,6) für eine für beide Schiftungen (1″) differenzierte Abzugsgeschwindigkeit mit unterschiedlicher Drehzahl antreibbar angelegt sind.

8. Walzenaustrag nach Patentanspruch 1 bis 7, mit mehr als einem Austragwalzenpaar (5, 6) dadurch gekennzeichnet, daß je zwei Austragwalzen (5, 6) mit ihrer Ummantelung (9) derart zu einer Austrageinheit (2) ausgebildet und zu den übrigen Austrageinheiten (2) in Walzenlängsrichtung ausgerichtet sind, daß zwei oder mehrere Austrageinheiten (2) mit einem gemeinsamen Antrieb (7) verbindbar sind und diesen Austrageinheiten (2) einer darunterliegende gemeinsame Förderschnecke (20) zugeordnet ist.

9. Walzenaustrag nach einem der Patentansprüche 1 bis 8, dadurch gekennzeichnet, daß der Austragtrichter (22) nach unten durch einen Trog (19) mit Sammelschnecke (20) fortgesetzt ist, und der Austragtrichter (22) und der Trog (19) einen geschlossenen Abfördertrichter (23) bilden, in dessen mittleren Bereich, im wesentlichen unterhalb der Austragwalzen (5, 6) der Sattel (18) zugeordnet ist.

## Claims

1. Roller discharge for a storage silo (1) for floury bulk goods, composed of a discharge funnel (22), at least two parallel rollers (5, 6), which are mounted adjacently in a horizontal plane so as to be rotatable in the discharge funnel (22), an at least partial sheathing (9) of the rollers (5, 6), and longitudinal webs (8), evenly distributed over these rollers (5, 6), characterised

a) in that each roller (5, 6) is sheathed in the manner of a funnel and, in this case, the sheathing (9) has at least approximately cylindrical segments which are arranged concentrically relative to the relevant roller (5, 6),

b) in that, on both sides in each end position of each roller (5, 6), at least one longitudinal web (8) is in a covered location in relation to the sheathing (9), and

c) in that the central parts of the sheathing (9) are constructed as a common saddle (18) extending at least over the lower half of the rollers (5, 6), have at their lower end an accumulation surface (14) and the rollers (5, 6) - seen from above - are driven rotatably from the outside to the common centre.

2. Roller discharge according to Claim 1, characterised in that the accumulation surface ( 14 ) has an oblique position between 30° and 60° to the horizontal.

3. Roller discharge according to Claim 1 or 2, characterised in that the longitudinal webs (8) of the discharge rollers (5, 6) have a conveying component which is active only in the circumferential direction.

4. Roller discharge according to at least one of the preceding claims, characterised in that two double rollers (5, 6), with the sheathing (9), form a discharge unit (2) which can be attached directly to the free lower opening (1') of a storage silo (1), and in that a collecting screw conveyor module (3) having a longitudinal conveyor device, preferably a conveyor screw (20), can be attached as a second module at the bottom of the discharge unit screw (2), the collecting conveyor module (3) being provided for discharging the product to a "point".

5. Roller discharge according to at least one of the preceding Claims 1 to 8, characterised in that a speed-adjustable drive (7), which preferably has means for remote control, is assigned to the discharge rollers (5, 6).

6. Roller discharge according to at least one of the preceding claims, characterised by an arrangement of the discharge rollers (5, 6) in such a way that the filling of the discharge chambers (17) takes place during the rotation of said discharge rollers and thus the discharge takes place mainly in the region of the silo shaft walls (1").

7. Roller discharge according to at least one of the preceding claims, characterised in that the two discharge rollers (5, 6) are designed so as to be drivable at different rotational speeds for an extraction speed which is differentiated for the two silo shaft walls (1").

8. Roller discharge according to Claims 1 to 7, having more than one pair of discharge rollers (5, 6), characterised in that in each case two discharge rollers (5, 6) with their sheathing (9) are constructed to form a discharge unit (2) and are aligned in the longitudinal direction of the rollers relative to the other discharge units (2) in such a way that two or more discharge units (2) can be connected to a common drive (7), and a common screw conveyor (20), located below the discharge units, is assigned to said discharge units (2).

9. Roller discharge according to one of claims 1 to 8, characterised in that the discharge funnel (22) is continued downwards by a trough (19) with a collecting screw conveyor (20), and the discharge funnel (22) and the trough (19) form a closed conveying funnel (23), to the central region of which, essentially below the discharge rollers (5, 6), the saddle (18) is assigned.

## Revendications

1. Extracteur à cylindres pour un silo de stockage (1) de matières pulvérulentes en vrac, comprenant une trémie d'extraction (22), au moins deux cylindres parallèles (5,6), logés sur un plan horizontal l'un à côté de l'autre et de façon rotative dans la trémie d'extraction (22), une enveloppe au moins partielle (9) des cylindres (5, 6), ainsi que des traverses longitudinales (8) réparties régulièrement sur ces cylindres (5, 6), caractérisé en ce que

a) chaque cylindre (5,6) est enveloppé à la manière d'une trémie, l'enveloppe (9) présentant des segments de cylindre au moins rapprochés qui sont disposés concentriquement par rapport au cylindre en question (5, 6),

b) en ce que, des deux côtés, dans chaque position extrême de chaque cylindre (5, 6), au moins une traverse longitudinale (8) se trouve en position recouverte par rapport à l'enveloppe (9) et

c) en ce que les parties centrales de l'enveloppe (9) sont conçues en tant que selle commune (18) s'étendant au moins au-dessus de la moitié supérieure des cylindres (5, 6), présentent une surface d'accumulation (14) à leur extrémité inférieure et en ce que les cylindres (5, 6) - vus d'en haut - sont entraînés en rotation, de l'extérieur vers le centre commun.

2. Extracteur à cylindres selon la revendication 1, caractérisé en ce que la surface d'accumulation (14) a une position inclinée entre 30° et 60° par rapport à l'horizontale.

3. Extracteur par cylindres selon les revendications 1 ou 2, caractérisé en ce que les traverses longitudinales (8) des cylindres d'extraction (5, 6) présentent une composante d'acheminement efficace uniquement dans le sens circonférentiel.

4. Extracteur par cylindres selon au moins l'une des revendications ci-dessus, caractérisé en ce que deux cylindres doubles (5, 6) forment avec l'enveloppe (9) une unité d'extraction (2) qui est directement fixable à l'ouverture inférieure libre (1') d'un silo de stockage (1) et en ce qu'une unité modulaire à vis sans fin collectrice (3) avec un transporteur longitudinal, de préférence une transporteuse à vis sans fin (20), est fixable, en tant que deuxième unité modulaire (3), en bas à l'unité d'extraction (2), cependant que l'unité modulaire à vis sans fin collectrice (3) est prévue pour l'évacuation du produit en un "point".

5. Extracteur selon au moins l'une des revendications 1 à 8 ci-dessus, caractérisé en ce qu'une commande à vitesse de rotation réglable (7) qui présente de préférence des organes de commande à distance, est attribuée aux cylindres d'extraction (5, 6).

6. Extracteur par cylindres selon l'une des revendications ci-dessus, caractérisé en ce que les cylindres d'extraction (5, 6) sont disposés de telle sorte que, lors de leur rotation, le remplissage des chambres d'extraction (17) et donc l'extraction s'effectue surtout dans la zone d'adossement (1").

7. Extracteur par cylindres selon au moins l'une des revendications ci-dessus, caractérisé en ce que les deux cylindres d'extraction (5, 6) sont installés de façon à être actionnés pour une vitesse de décharge différenciée pour les deux adossements (1") avec une vitesse de rotation différente.

8. Extracteur par cylindres selon les revendications 1 à 7, avec plus d'une paire de cylindres d'extraction (5, 6) caractérisé en ce que chaque paire de cylindres d'extraction (5, 6) est conçue avec leur enveloppe (9) de façon à former une unité d'extraction (2) et est alignée, par rapport aux autres unités d'extraction (2) dans le sens longitudinal des cylindres, en ce que deux ou plusieurs unités d'extraction (2) sont reliables à une commande commune (7) et en ce qu'une transporteuse à vis sans fin commune (20), située en-dessous de ces unités d'extraction (2) est attribuée à celles-ci.

9. Extracteur par cylindres selon l'une des revendications 1 à 8, caractérisé en ce que la trémie d'extraction (22) est prolongée vers le bas par une auge (19) avec vis sans fin collectrice (20) et en ce que la trémie d'extraction (22) et l'auge (19) forment une trémie fermée d'évacuation (23) dans la zone médiane de laquelle se trouve essentiellement la selle (18) en-dessous des cylindres d'extraction.

# Fig. 1

# Fig. 1a

EP 0 294 428 B1

# Fig. 2

Fig.3a

Fig.3b

Fig.3c